(19) 

**Europäisches Patentamt**
**European Patent Office**
**Office européen des brevets**

(11)  **EP 4 711 819 A1**

(12)  **EUROPEAN PATENT APPLICATION**

(43) Date of publication:
**18.03.2026   Bulletin 2026/12**

(21) Application number: **24200276.4**

(22) Date of filing: **13.09.2024**

(51) International Patent Classification (IPC):
**G01S 19/22** $^{(2010.01)}$    **G01S 19/30** $^{(2010.01)}$

(52) Cooperative Patent Classification (CPC):
**G01S 19/22; G01S 19/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **u-blox AG**
**8800 Thalwil (CH)**

(72) Inventors:
• **Dumphart, Gregor**
**8800 Thalwil (CH)**
• **Cheng, Zhenlan**
**8800 Thalwil (CH)**

(74) Representative: **Epping - Hermann - Fischer
Patentanwaltsgesellschaft mbH
Schloßschmidstraße 5
80639 München (DE)**

(54)  **METHOD FOR PROCESSING GLOBAL NAVIGATION SATELLITE SYSTEM SIGNALS**

(57)   A method for processing GNSS signals comprises obtaining respective output sequences from $N$ correlators for a snapshot of a received GNSS signal, wherein each sequence has $K$ values, and the $N$ correlators correspond to $N$ different delays of a PRN code sequence; computing one or more complex values using the output sequence; computing a reference complex value using the one or more complex values; for each output sequence, computing respective one or more real values using the reference complex value and the respective one or more complex values of the output sequence; and estimating a delay of the received GNSS signal using the one or more real values of the output sequences.

**Fig 1**

**Description**

TECHNICAL FIELD

This disclosure relates to a method for processing global navigation satellite system, GNSS, signals. The disclosure further relates to a module and a terminal device.

BACKGROUND ART

GNSS receivers are widely used with terminal devices to provide positioning information for the terminal devices, such as positions, velocities and navigation, etc. GNSS receivers receive GNSS signals from multiple satellites. By processing GNSS signals, GNSS receivers estimate positions, velocities and time, and may further provide navigation for terminal devices.

Accurate estimation of positions, velocities, etc. require accurate estimation of delays and Doppler shifts of GNSS signals. Nevertheless, the environments of propagating GNSS signals are diverse. GNSS signals are subject to multipath scenarios. In multipath scenarios, it is particularly challenging to accurately estimate delays of GNSS signals.

Furthermore, in some scenarios when power saving is desired, a GNSS receiver may not take snapshots of received signals continuously, and only individual snapshots are available for processing. In such case, conventional closed tracking loops, such as phase tracking loops, cannot be effectively used to estimate delays of GNSS signals. It is further challenging to accurately estimate delays of GNSS signals without closed tracking loops.

Therefore, it remains challenging to obtain accurate estimation of delays with non-continuous snapshots in multipath scenarios.

SUMMARY OF INVENTION

An object to be achieved is to provide an improved processing concept for providing accurate estimation of delays with non-continuous snapshots of GNSS signals in multipath scenarios.

This object is achieved with the subject-matter of the independent claims. Embodiments and developments derive from the dependent claims.

According to the present disclosure, a GNSS receiver takes and processes snapshots of a GNSS signal. A snapshot is taken from a GNSS signal received during a period of time, e.g., tens or hundreds of milliseconds. Signal acquisition can be performed using snapshots of a GNSS signal. For power saving purpose, only non-continuous snapshots of the GNSS signal are available, and the signal processing is performed on the individual snapshots. Signal tracking relying on closed tracking loops cannot properly track phases of the GNSS signal, and thus cannot effectively estimate delays of the signal. In the present disclosure, delays of a GNSS signal are code phases in the pseudorandom noise, PRN, code sequence used by the GNSS signal. Accurate delays can be used to obtain accurate pseudoranges and positions, etc. for terminal devices using GNSS receivers.

The improved processing concept is based on the idea that, after signal acquisition, individual snapshots rather than continuous snapshots are processed for estimating delays of a GNSS signal. Correlations of a snapshot with different delays are obtained. Complex values having in-phase and quadrature components are computed from the correlations. Real values are further computed by co-phasing the complex values with a reference value selected from the complex values, and the real values are used to estimate the delay of the GNSS signal.

By means of the improved processing concept, a line-of-sight, LOS, component in the GNSS signal can be selected and non-line-of-sight, NLOS, components can be suppressed. In this way, multipath effects can be overcome for individual snapshots. An accurate estimation of delays of a GNSS signal can be achieved in multipath and power saving scenarios.

According to the present disclosure, the method for processing GNSS signals comprises obtaining respective output sequences from $N$ correlators for a snapshot of a received GNSS signal, wherein each sequence has $K$ values, and the $N$ correlators correspond to $N$ different delays of a PRN code sequence, $N$ and $K$ being positive integers. For example, $N$ different delays of the PRN code sequence are used by $N$ correlators. $N$ may be equal to or greater than 2. For example, $N$ may be equal to or greater than 7. A greater number of $N$ improves accuracy of estimation in high dynamical scenarios, under multipath interference, or limited signal bandwidth scenarios. A greater number of $N$ may also allow faster convergence after signal acquisition and for avoiding problems with binary offset carrier, BOC, side peaks. The method further comprises, for each output sequence, computing one or more complex values using the output sequence; computing a reference complex value using the one or more complex values; for each output sequence, computing respective one or more real values using the reference complex value and the respective one or more complex values of the output sequence; and estimating a delay of the received GNSS signal using the one or more real values of the output sequences. The estimated delay is accurate and comparable with that by conventional phase tracking loops using a continuous signal or continuous snapshots.

The above correlators and their respective output sequences may be indexed with an index $n, n \in [1, N]$. The $K$ values in the $n^{th}$ output sequence may be complex values having in-phase and quadrature components and denoted as $s[n, q], q \in [1, K]$. The reference complex value may be denoted as $z_{ref}$.

In example implementations, the method can be performed by one or more modules in a GNSS receiver or in a terminal device with a GNSS receiver, etc. The method can be implemented in software module(s) and is computationally efficient.

In some implementations, for each output sequence computing the one or more complex values comprises computing the one complex value $z[n]$ for the $n^{th}$ output sequence by:

$$z[n] = \frac{1}{K} \sum_{q=1}^{K} s[n, q] \ .$$

In such implementations, one complex value from the $K$ values is computed for each output sequence. For $N$ output sequences, $N$ complex values are computed, which are $z[n]$ for $n \in [1, N]$. The $N$ complex values are further used to select the reference complex value and to compute real values for delay estimation.

In some alternative implementations, for each output sequence computing the one or more complex values comprises computing the complex values $z[n, k]$ for the $n^{th}$ output sequence by performing a $K$-point discrete Fourier transform, DFT, of the $n^{th}$ output sequence, wherein $k \in [1, K]$. In such implementations, the $K$-point DFT is performed for the $K$ values of each output sequence. The $K$ values from the $n^{th}$ correlator are correlation values at $K$ sampling times in the time domain, and the computed complex values $z[n,k]$ form a frequency spectrum of the $n^{th}$ output sequence with $K$ frequency components in the frequency domain. For $N$ output sequences, $N$ frequency spectra are computed, which are $z[n,k]$ for $n \in [1, N]$ and $k \in [1, K]$. The $N$ frequency spectra are further used to select the reference complex value and to compute real values for delay estimation.

In some further implementations, with the $N$ frequency spectra, the method further comprises estimating a Doppler shift of the received GNSS signal using the real values computed from the complex values. The estimated Doppler shift is accurate and comparable with that by conventional frequency tracking loops using continuous snapshots.

In some implementations, for each output sequence the respective one or more real values of the one or more complex values are computed by co-phasing the complex values with the reference value. For co-phasing, phases of the complex values are adjusted by using the phase of the reference complex value. For example, for each output sequence computing the respective one or more real values of the one or more complex values comprises computing a unit complex value $u$ of the reference complex value $z_{ref}$ by:

$$u = \frac{z_{ref}}{|z_{ref}|} \ ,$$

wherein $|z_{ref}|$ is an absolute value of $z_{ref}$, and determining the one or more real values as the real component of a multiplication of $(z[n]u^*)$, wherein $u^*$ is a complex conjugate of the unit complex value $u$. The one or more complex value of the $n^{th}$ output sequence is denoted as $z[n]$. $z[n]$ may be the one complex value when one complex value from the $K$ correlation values is computed for each output sequence, and one correspondent real value is computed using the above multiplication; or $z[n]$ may be the frequency spectrum with $K$ complex values of the $n^{th}$ output sequence computed by the $K$-point DFT, and $K$ correspondent real values are computed using the above multiplication.

It is considered that the selected reference complex value corresponds to the complex-valued amplitude of a LOS component in the GNSS signal. By the above computation on the complex values, phases of the complex values are adjusted by using the phase of the reference complex value, i.e., by using the unit complex value $u$. NLOS components in the GNSS signal can be suppressed. Furthermore, this enlarges the linear region of the correlation function in the case of GNSS signals that use BOC modulation, thus alleviating problems the BOG correlation side peaks may cause during estimation.

By the above computation, phases of the complex values are adjusted, and the complex values are converted into real values. The real values are further used to estimate the delay of the GNSS signal. By adjusting phases, the accuracy of estimated delays can be improved in multipath scenarios.

In some implementations, computing the reference complex value comprises selecting the complex value as the reference complex value which has the largest absolute value among all the one or more complex values of all the output sequences. In some alternative implementations, computing the reference complex value comprises computing the reference complex value from a weighted linear combination of all the one or more complex values of all the output sequences. In some further alternative implementations, computing the reference complex value comprises computing the reference complex value by solving an optimization problem, including fitting all the one or more complex values of all the output sequences optimally to a predefined shape drawn at the complex value domain, and the reference complex value corresponds to a peak at the fitted shape.

The above selected reference complex value is considered to correspond to the complex-valued amplitude of a LOS component in the GNSS signal and can be used to suppress NLOS components in the GNSS signal.

In some implementations, estimating the delay of the received GNSS signal using the one or more real values of the output sequences comprises using a code phase discriminator for the estimation. For example, any code phase discriminator can be applied, comprising the early-late gate, a multigate discriminator such as the double-delta discriminator, any linear combination or non-linear function of such discriminators, any zero-crossing interpolation between such discriminators evaluated at neighboring indices, the intersection point between a line through two early neighboring taps and a line through two late neighboring taps, or the peak coordinates of a fitted triangle or pulse shape or polynomial.

In some implementations, the method further comprises performing by each correlator a correlation operation to generate the respective output sequence, wherein each value in the output sequence is computed by the correlation operation between the snapshot and the PRN code sequence with the correspondent delay of the correlator at a sampling time point.

In some implementations, the method further comprises taking and processing a snapshot of the received GNSS signal at a predetermined duty cycle of a cycle, wherein the snapshot and the cycle are set to at least one of: a duration of the snapshot duration is tens or hundreds of milliseconds; a duration of the snapshot duration is 200ms; the duty cycle is between 2% and 20% of the cycle; the duty cycle is between 20ms and 2 seconds; and the cycle is hundreds of milliseconds or a few seconds. With such duty cycles, a GNSS receiver can greatly save power consumption, which an accurate delay can be estimated by using the limited individual snapshots.

In some implementations, the received GNSS signal comprises a line-of-sight, LOS, signal component and one or more signal components from at least one additional propagation path. The signal components from additional propagation paths other than the LOS path may have different delays from the accurate delay of the GNSS signal, and thus impacts an accurate estimation of the delay. The method processes the GNSS signal to overcome the multipath effects and to obtain an accurate delay estimation.

The present disclosure further provides a module for processing GNSS signals according to the improved processing concept. The module is configured to perform a method according to any one of the implementations described above.

The present disclosure further provides a terminal device comprising a module according to any one of the implementations described above.

According to one embodiment of the improved processing concept, a computer program product comprises instructions which, when executed on one or more processors of a device, cause the one or more processors to perform a method according to any one of the implementations described above.

BRIEF DESCRIPTION OF DRAWINGS

The improved processing concept will be explained in more detail in the following with the aid of the drawings. Elements and functional blocks having the same or similar function bear the same reference numerals throughout the drawings. Hence their description is not necessarily repeated in the following drawings.

In the drawings:

Figure 1      shows a flowchart of a method for processing GNSS signals;

Figure 2      shows an example sequence of correlation values;

Figure 3a-3c      show an example of a GNSS signal in a multipath scenario; and

Figure 4      shows an example of a module for processing GNSS signals.

DETAILED DESCRIPTION

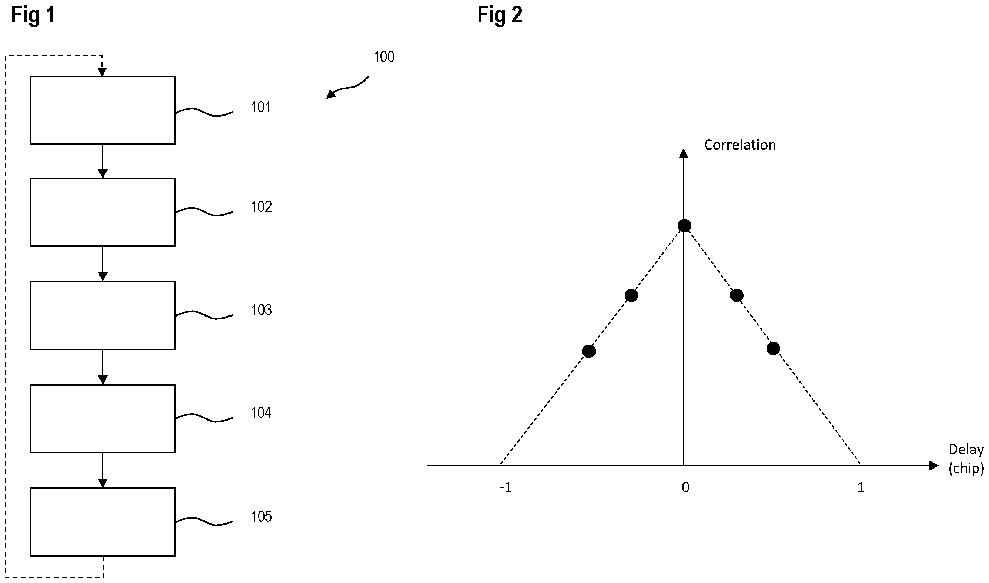

Figure 1 shows a flowchart of an example implementation of a method 100 for processing GNSS signals.

Method 100 may be performed by one or more modules in a device, such as a GNSS receiver or a terminal device with a GNSS receiver. In the following, a GNSS receiver is used as an example to perform the method.

For example, before step 101 of method 100, the GNSS receiver receives a GNSS signal and takes a snapshot for a period of time of the GNSS signal. A duration of a snapshot may range between tens to thousands of milliseconds. A duration of a snapshot may be adapted to requirements of signal accumulation given a current signal strength. The snapshot is down-converted to an intermediate frequency or a baseband frequency, and converted to digital signals for further digital signal processing. The digital signal processing may involve various procedures. For example, an initialization is performed to search and acquire the GNSS signal. After signal acquisition, the GNSS receiver may perform method 100 to accurately estimate the delay of the GNSS signal using the individual snapshot. The estimated delay of the GNSS signal is a code phase of the PRN code sequence used by the GNSS signal.

The received GNSS signal may be propagated in a multipath environment. In such environment, the received GNSS signal may comprise a LOS signal component and one or more NLOS signal components from at least one additional propagation path. The LOS and NLOS signal components may have different delays of the PRN code sequence.

In step 101 of method 100, the GNSS receiver obtains respective output sequences from $N$ correlators for the snapshot of the received GNSS signal. Each output sequence has $K$ correlation values.

In an example embodiment, the GNSS receiver has a plurality of correlators. A correlator performs correlation operations. For example, it computes inner product of two inputs. For performing step 101, the snapshot of the received GNSS signal is a first input of each correlator. The input snapshot may be a digital signal which is converted from the received analog signal and its frequency is converted to an intermediate band or a base band. The other input of each correlator is a PRN code sequence. The PRN code sequence is a known PRN code sequence that is used by the received GNSS signal. Each correlator is input with the same PRN code sequence with a different delay. A different delay is a different code phase of the same PRN code sequence. When the GNSS receiver uses $N$ correlators, the $N$ correlators apply the same PRN code sequence with $N$ respective delays to compute correlations with the snapshot.

For example, the different delays applied by the correlators are selected within $\pm 1$ chip duration of the PRN code sequence used by the received GNSS signal. The different delays can be fractions of a chip duration of the PRN code sequence. Depending on PRN code sequences used in different GNSS systems, a chip duration is the reciprocal of the GNSS signal chipping rate with the example values 511 kHz (GLONASS L1), 1023 kHz (GPS L1C/A), or 10230 kHz (GPS L5). A spacing between different delays may be set to a same value, e.g., 1/8, 1/16 or 1/32 of a chip duration. For GPS L1C/A system, a correspondent spacing would be 122, 61 or 31 ns. Different delays can be calculated by using the spacing value and the chip duration. The different delays applied by the correlators have finer ranges compared with those used in search and acquisition procedures for receiving GNSS signals. For example, compared with signal acquisition which obtains a coarse delay range about $\pm 1$ chip duration, e.g., $\pm 1$ us, and resulting pseudoranges may range between hundreds of meters, delays used in step 101 have much finer ranges.

For computing correlations, the correlators perform correlation operations at discrete sampling time points. The sampling frequency used by the correlators may be much lower than the frequency of the input snapshot. For example, 1kHz of the correlators can be used for a 32MHz or a 64MHz signal, due to despreading. This allows subsequent processing of outputs of the correlators to be carried out by software implementations. By performing correlation operations at sampling time points, each correlator outputs a sequence of correlation values between the input snapshot and the PRN code sequence with a respective delay. For example, for the input snapshot, each correlator performs correlation operation at $K$ sampling time points during the period of the snapshot. Each output sequence thus has $K$ correlation values. Assuming that a sampling interval of each correlator is $T_S$, a sampling rate of each correlator is correspondingly $F_S = 1/T_S$, a duration of an input snapshot is $T$, the number of $K$ is then $T/T_S = T \cdot F_S$. As an example, a duration of an input snapshot may be 200ms, the correlators apply a sampling rate of 1kHz. There are thus 200 sample time points during the period of this snapshot. Each output sequence thus has 200 correlation values. The sampling rate may be smaller than 1kHz, such as 500Hz, or greater than 1kHz, such as 2kHz. A higher number of $K$ results in smaller spacing between frequency bins after DFT performed in step 102.

Figure 2 shows an example sequence of output correlation values. In this figure, five correlation values output by five correlators at a same sampling time point are shown. The five correlators apply different delays within $\pm 1$ chip duration of a received GNSS signal. Among the five correlators, the correlator applying a delay that is closest to the received GNSS signal outputs the highest correlation value, which is the peak in the figure. It thus can be seen that, the delay corresponding to the peak correlation value is closest to that of the received GNSS signal among all the delays applied by the correlators.

In Figure 2, the delays applied by the correlators are distributed within $\pm 1$ chip duration of the received GNSS signal with spacing between each other. A delay may be denoted as a delay tap, or a tap. A delay tap refers to a delay having one spacing value, two delay taps refer to a delay having two spacing values, and so on. In this way, $N$ different delays used by $N$ correlators can be conveniently represented by $N$ delay taps.

Referring back to Figure 1, in step 101, the GNSS receiver obtains respective output sequences from $N$ correlators for the snapshot of the received GNSS signal. Each output sequence has $K$ correlation values that are computed at $K$ sampling time points within the duration of the snapshot. The $N$ correlators apply a same PRN code sequence with $N$ respective delays, and the PRN code sequence is used by the received GNSS signal. The GNSS receiver thus obtains $N$ output sequences with $K$ correlation values per sequence.

In some implementations, the correlation values in the output sequences are complex values that have in-phase and quadrature components. For example, the snapshot input to the correlators contains complex values, and the correlators perform correlation operations with complex values.

In step 102 of method 100, for each output sequence, the GNSS receiver computes one or more complex values using the output sequence.

In an example implementation for step 102, the GNSS receiver computes a plurality of complex values for each output sequence by performs a $K$-point DFT of the output sequence.

As each output sequence has $K$ correlation values in the time domain, a $K$-point DFT computation converts the sequence into a spectrum with $K$ frequency components in the frequency domain. Each output sequence thus has $K$ computed complex values. The computed complex values for the $n^{th}$ output sequence can be denoted as $z[n, k]$, where $k \in [1, K]$. The amplitudes of $K$ complex values in the spectrum reflect correlation at the $K$ frequency components. The GNSS receiver thus obtains $N$ frequency spectra with $K$ complex values per spectrum.

The frequency components are distributed in a frequency window with certain spacing values between each other. The frequency differences among the frequency components are considered as possible Doppler shifts in the received GNSS signal. The frequency differences may be denoted as frequency bins. One frequency bin refers to a frequency difference with one spacing value, two frequency bins refer to a frequency difference with two spacing values, and so on. In this way, frequency differences are conveniently represented by frequency bins.

In such implementations when DFT is performed, in addition to estimate delays of GNSS signals, the method may estimate Doppler shifts of GNSS signals (to be described in step 105). For an improved estimation of Doppler shifts, parameters in the DFT computation can be configured to adjust the resulting frequency spectra. For example, twiddle factors of the DFT can be configured, and the number of resulting frequency components in the frequency domain can be adjusted other than the number $K$ of the sampling times. The size of the frequency window in which the resulting frequency components distributed is also adjusted. Furthermore, different application scenarios of GNSS receivers, such as in automotive driving, aviation, or in wearable devices, may have different dynamics of movements, velocities, etc. Doppler shifts may have different dynamics in different application scenarios, and a possible range of Doppler shifts may vary in different application scenarios. Twiddle factors in DFT may be configured based on application scenarios.

In another example implementation for step 102, the GNSS receiver computes one complex value for each output sequence, without performing DFT.

For example, for the $n^{th}$ output sequence, the $K$ correlation values in the $n^{th}$ output sequence are complex values and are denoted as $s[n, q]$, $n \in [1, N]$, $q \in [1, K]$. The one complex value $z[n]$ for the $n^{th}$ output sequence can be computed by:

$$z[n] = \frac{1}{K} \sum_{q=1}^{K} s[n, q] \ .$$

In this way, for each output sequence, the $K$ correlation values are combined into one complex value for further processing.

In step 103 of method 100, the GNSS receiver computes a reference complex value using all the one or more complex values of all the output sequences. The reference complex value can be selected or computed in different ways.

As an example, the complex value which has the largest absolute value among all the one or more complex values of the output sequences is selected as the reference complex value. For example, when one complex value is computed for each output sequence in step 102, the index $n_{ref}$ of the selected reference complex value among all the complex values $z[n]$ of all the output sequences is obtained by:

$$n_{ref} = argmax_n |z[n]|, \qquad n \in [1, N]$$

and accordingly, the reference complex value $z_{ref}$ is

$$z_{ref} = z[n_{ref}].$$

For example, when $K$ complex values are computed for each output sequence by DFT in step 102, the index $(n_{ref}, k_{ref})$ of the selected reference complex value among all the complex values $z[n,k]$ of all the output sequences is obtained by:

$$(n_{ref}, k_{ref}) = argmax_{n,k} |z[n, k]|, \qquad n \in [1, N], k \in [1, K],$$

and accordingly, the reference complex value $z_{ref}$ is

$$z_{ref} = z[n_{ref}, k_{ref}].$$

As another example, the reference complex value is computed from a weighted linear combination of all the one or more complex values of all the output sequences. For example, when one complex value is computed for each output sequence in step 102, the reference complex value $z_{ref}$ is computed by:

$$z_{\text{ref}} = \sum_{n=1}^{N} z[n] \cdot w[n] \, ,$$

where $w[n]$ is a weighting function. $w[n]$ may be defined as:

$$w[n] = \frac{|z[n]|^p}{\sum_{n=1}^{N} |z[n]|^p} \, ,$$

Where $p$ is a tunable positive exponent parameter, e.g., $p = 2$.

For example, when $K$ complex values are computed for each output sequence by DFT in step 102, the reference complex value $z_{ref}$ is computed by:

$$z_{\text{ref}} = \sum_{n=1}^{N} \sum_{k=1}^{K} z[n, k] \cdot w[n, k] \, ,$$

where the weighting function $w[n, k]$ may be defined as:

$$w[n, k] = \frac{|z[n, k]|^p}{\sum_{n=1}^{N} \sum_{k=1}^{K} |z[n, k]|^p} \, .$$

As a further example, when $K$ complex values are computed for each output sequence by DFT in step 102, the reference complex value may be computed by solving an optimization problem, including fitting all the one or more complex values of all the output sequences optimally to a predefined shape drawn at the complex value domain, and the reference complex value corresponds to a peak at the fitted shape. The optimization problem may be formulated based on a minimum least-squared error. The predefined shape may be a triangle shape similar as in Figure 2.

In step 104 of method 100, for each output sequence, the GNSS receiver computes respective one or more real values using the reference complex value and the respective one or more complex values of the output sequence. The reference complex value $z_{ref}$ obtained in step 103 is used to compute the real values corresponding to the complex values obtained in step 102. Each complex value is used to obtain a correspondent real value.

In some implementations, co-phasing is performed in the step to obtain the real values. By co-phasing, phases of the complex values are adjusted by using the phase of the reference complex value. In an example implementation, for computing the real values, a unit complex value $u$ of the reference complex value $z_{ref}$ is computed by:

$$u = \frac{z_{ref}}{|z_{ref}|} \, .$$

The unit complex value $u$ has a unit magnitude and a same phase as the phase of the reference complex value $z_{ref}$.

The real values are determined as the real component of a multiplication of $(z[n]u^*)$, wherein $u^*$ is a complex conjugate of the unit complex value $u$.

When one complex value $z[n]$ is computed for each output sequence in step 102, one real value $y[n]$ can be obtained for the $n^{th}$ output sequence using the above multiplication, e.g.:

$$y[n] = \mathrm{Re}(u^*_{\mathrm{ref}} \cdot z[n]) .$$

When $K$ complex values are computed for each output sequence by DFT in step 102, the complex values $z[n]$ refer to $K$ complex values $z[n, k]$ of the $n^{th}$ output sequence, and each of $K$ real values $y[n, k]$ can be determined as the real component of a multiplication of $(z[n, k] u^*)$, e.g.:

$$y[n, k] = \mathrm{Re}(u^*_{\mathrm{ref}} \cdot z[n, k]) .$$

In this way, the complex values obtained in step 102 are converted to the real values in step 104 for further processing such as estimating the delay of the GNSS signal. The real values obtained in step 104 suppress NLOS components with different delays in the GNSS signal and thus the estimation of the delay can be more accurate.

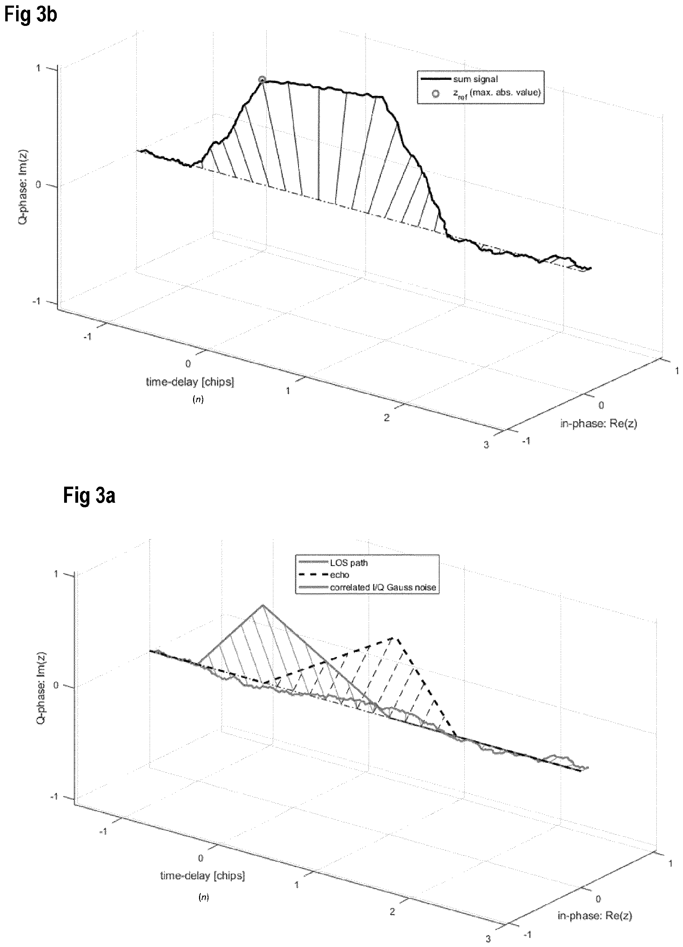

Figure 3a and 3b show an example of a GNSS signal in a multipath scenario. In the example, the GNSS signal is modulated using BPSK and is represented by a complex value $z$.

The axis of time-delay in Figures 3a-3c shows different delays applied by multiple correlators. Values of in-phase and quadrature components of the signal are shown in Figures 3a and 3b.

Figure 3a shows three possible signal components in the GNSS signal due to multipath propagation, which include a LOS path signal component shown in solid straight lines, an echo signal component (which is from a NLOS path) shown in dotted lines, and Gaussian noise in a random shape of line. It is shown in Figure 3a that, the LOS path signal component may have a triangle shape of correlation values and the echo signal component may also have a triangle shape of correlation values. The peaks of the two triangles are different as the two signal components have different delays.

Figure 3b shows the correlation values actually observed, which is a combination of the signal components shown in Figure 3a. Due to the LOS path and the echo signal components, the shape of the correlation values is not an obvious triangle.

The correlation values shown in Figures 3a and 3b may be considered as the complex values obtained as described in step 102, where one complex value is computed for each output sequence. The complex value with the largest absolute value may be selected as the reference complex value, as shown in the circle in Figure 3b. The correlation values shown in Figures 3a and 3b may also be considered as the complex values of a same frequency component in the computed frequency spectra, e.g., $z[n, k_{ref}]$, $n \in [1, N]$.

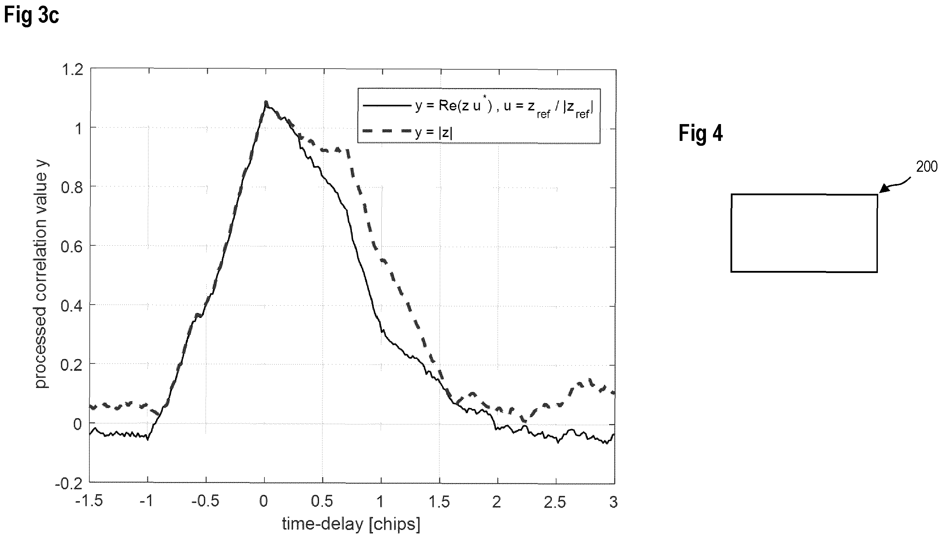

Figure 3c shows the real values computing from the complex values in Figure 3b. The real values computed using the reference complex value as described in step 104 are shown in the solid line. As an example comparison, different real values computed as the magnitudes of the complex values are shown in the dotted line. The real values obtained by step 104 form a clear triangle with a sharp peak at the delay of the LOG signal component. The delay of the LOG signal component is more likely to be accurately estimated in further processing. The different real values that are not obtained by using step 104 have much more similar values and it is more likely to obtain inaccurate estimation of delays of GNSS signals.

Referring back to Figure 1, in step 105 of method 100, the GNSS receiver estimates the delay of the received GNSS signal using the one or more real values of the output sequences obtained in step 104.

For example, a subset of the real values can be selected, and a code phase discriminator can be used with the subset of the real values for the estimation. When one complex value and one correspondent real value is obtained for each output sequence in steps 102 and 104, the subset can be all the real values of the output sequences. When $K$ complex values and $K$ correspondent real values are obtained for each output sequence in steps 102 and 104, the subset can be the real values having a same index $k_{ref}$ of the reference complex value, e.g., $y[n, k_{ref}]$, $n \in [1, N]$.

In an example implementation, the delay is estimated based on an early-late gate discriminator $D$ that is the difference between the real values at $(n_{ref} - 1, k_{ref})$ and at $(n_{ref} + 1, k_{ref})$, and the estimated delay in relation to $n_{ref}$ is then computed as $D \cdot T_{chip}/A_{ref}$ where $T_{chip}$ is the chip duration of the GNSS signal and $A_{ref}$ is the real value at $(n_{ref}, k_{ref})$.

In another example implementation, the delay is estimated based on a multi-gate discriminator value $D_0$ computed from taps $(n_{ref} + x, k_{ref})$ neighboring the reference tap $n_{ref}$, e.g. the double delta discriminator computed for $x \in \{-2, -1, 1, 2\}$, to then compute the estimated delay as $g^{-1}(D_0)$ where the function $g$ is a pre-trained non-linearity reflecting discriminator value $D_0$ versus delay for the given signal modulation and signal bandwidth.

In a further example implementation, the delay is estimated based on three multi-gate discriminator values $D_{-1}$, $D_0, D_1$, e.g. of the double delta kind, computed in reference to the reals values neighboring $(n_{ref} - 1, k_{ref})$, $(n_{ref}, k_{ref})$, $(n_{ref} + 1, k_{ref})$, respectively, and by then computing the estimated delay with linear interpolation at the position of the zero-crossing between either $D_{-1}, D_0$ or $D_0, D_1$, depending on which pair of $D_{-1}, D_0, D_1$ exhibits opposite signs.

In some implementations of step 105, when DFT is performed in step 102, the GNSS receiver may further estimate Doppler shift of the GNSS signal.

In an example implementation, a subset may be selected to contain the real values having a same index $n_{ref}$ of the reference complex value, e.g., $y[n_{ref}, k]$, $k \in [1, K]$. The real values in the subset are fitted to a polynomial curve or any other applicable spectrum template. The estimated Doppler shift corresponds to a maximum of the curve.

In another example implementation, the delay and the Doppler shift may be estimated in a combined way. The real values can be partially or completely fitted to a graph in a delay dimension and a Doppler shift dimension using a two-dimensional fitting algorithm. The delay and the Doppler shift may correspond to a peak in the graph.

In some implementations, after step 105 when the estimated delay, and the Doppler shift if available, are obtained, the GNSS receiver may use the estimation to correct parameters of a delay and a frequency of the received GNSS signal. The GNSS receiver may apply the corrected parameters to a local oscillator for tracking the GNSS signal. The corrected parameters may be further used for navigation, e.g., by a navigation engine.

In some implementations, after step 105, method 100 may be performed continuously, such that the method starts over with step 101 to process further snapshots when snapshots are taken continuously. In some implementations, after step 105, the GNSS receiver may reduce energy consumption for a period of time and do not take continuous snapshots. For example, the GNSS receiver may reduce energy consumption by shutting down some processing and/or receiving modules or functionalities. Snapshots of a GNSS signal are not taken continuously but with time intervals. For example, in an operation cycle, the GNSS receiver may receive and take a snapshot of a GNSS signal for a partial time in the cycle, process the snapshot and estimate delays and Doppler shifts by performing method 100, and does not take further snapshot in the rest of the cycle. For example, a cycle may be preset as 1 second and a duty cycle which is a ratio of time in the complete cycle with full operation of the GNSS receiver may be preset as 20%. The duration of a snapshot may be the same as the length of a duty cycle. In this case, the GNSS receiver may process a snapshot of 200ms using method 100, and may not perform any receiving and processing for 800ms.

A duration of a duty cycle and correspondently a duration of a snapshot may be adapted to requirements of signal accumulation given a current signal strength. Better power saving is achieved at the GNSS receiver by using a smaller duty cycle.

As further examples, a cycle may be set to a few seconds. The cycle may be below 1 second, such as hundreds of milliseconds. The cycle may be below 500ms, such as 400ms or 200ms. A duty cycle is a part of the cycle, such as 90% or 80% of the cycle. A duty cycle may be set as low as 20%, 10%, 2% or 1% of the cycle. The length of a duty cycle may be between 20ms to 2 seconds. Correspondingly, the duration of a snapshot, which has a same length of a duty cycle, may be a few seconds such as 2 seconds. The duration of a snapshot may be set below 2 seconds, below 1 second, below 500ms, below 200ms, or below 100ms. The duration of a snapshot may be set as low as 500ms, 200ms, 100ms, 50ms or 20ms.

Figure 4 shows an example of a module 200 for processing GNSS signals. Module 200 can be configured to perform the various implementations of method 100 as described above. In some implementations, module 200 may be a single module or more modules to perform method 100. Module 200 may be implemented in software and/or hardware. For example, module 200 may be configured to be connected with correlators, the correlators may be implemented in hardware, and module 200 may be completely implemented in software to perform any further processing in method 100 including steps 101-105 from obtaining output sequences from the correlators. Module 200 may be comprised in GNSS receiving modules, implemented in a GNSS receiver or in a terminal device with GNSS receiving modules.

Further implementations of module 200 become readily apparent from the various implementations described above in conjunction with the method 100.

In some implementations, a terminal device comprising module 200 may be implemented to perform method 100. Further implementations of the terminal device become readily apparent from the various implementations described above in conjunction with the method 100.

Hence, with the various implementations described above for processing GNSS signals, an individual snapshot of a GNSS signal is processed to overcome multipath effects. Continuous snapshots of GNSS signals are no longer required, which allows power saving of GNSS receivers.

Various embodiments of the improved processing concept for estimating delays and Doppler shifts of GNSS signals can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

LIST OF REFERENCE SIGNS

| | |
|---|---|
| 100 | method |
| 101-105 | steps |
| 200 | module |

**Claims**

1. A method for processing global navigation satellite system, GNSS, signals, the method comprising:

    - obtaining respective output sequences from N correlators for a snapshot of a received GNSS signal, wherein each sequence has $K$ values, and the $N$ correlators correspond to N different delays of a pseudorandom noise, PRN, code sequence, N and $K$ being positive integers;
    - for each output sequence, computing one or more complex values using the output sequence;
    - computing a reference complex value using the one or more complex values;
    - for each output sequence, computing respective one or more real values using the reference complex value and the respective one or more complex values of the output sequence; and
    - estimating a delay of the received GNSS signal using the one or more real values of the output sequences.

2. The method according to claim 1, wherein the $K$ values in the $n^{th}$ output sequence are complex values and are denoted as $s[n, q]$, $n \in [1, N]$, $q \in [1, K]$, and for each output sequence computing the one or more complex values comprises computing the one complex value $z[n]$ for the $n^{th}$ output sequence by:

$$z[n] = \frac{1}{K}\sum_{q=1}^{K} s[n,q] \ .$$

3. The method according to claim 1, wherein for each output sequence computing the one or more complex values comprises computing the complex values $z[n,k]$ for the $n^{th}$ output sequence by performing a K-point discrete Fourier transform of the $n^{th}$ output sequence, wherein $k \in [1,K]$.

4. The method according to claim 3 further comprising estimating a Doppler shift of the received GNSS signal using the real values of each output sequence.

5. The method according to any of claims 1 to 4, wherein the reference complex value is denoted as $z_{ref}$, the one or more complex values of the $n^{th}$ output sequence are denoted as $z[n]$, $n \in [1, N]$, and for each output sequence computing the respective one or more real values comprises:

    - computing a unit complex value $u$ of the reference complex value $z_{ref}$ by:

$$u = \frac{z_{ref}}{|z_{ref}|} \ ,$$

    wherein $|z_{ref}|$ is an absolute value of $z_{ref}$; and
    - determining the one or more real values as the real component of a multiplication of $(z[n]u^*)$, wherein $u^*$ is a complex conjugate of the unit complex value $u$.

6. The method according to any of claims 1 to 5, wherein computing the reference complex value comprises selecting the complex value as the reference complex value which has the largest absolute value among all the one or more complex values of the output sequences.

7. The method according to any of claims 1 to 5, wherein computing the reference complex value comprises computing the reference complex value from a weighted linear combination of all the one or more complex values of all the output sequences.

8.  The method according to any of claims 1 to 5, wherein computing the reference complex value comprises computing the reference complex value by solving an optimization problem, including fitting all the one or more complex values of all the output sequences optimally to a predefined shape drawn at the complex value domain, and the reference complex value corresponds to a peak at the fitted shape.

9.  The method according to any of claims 1 to 8, wherein estimating the delay of the received GNSS signal using the one or more real values of the output sequences comprises using a code phase discriminator for the estimation.

10. The method according to any of claims 1 to 9 further comprising performing by each correlator a correlation operation to generate the respective output sequence, wherein each value in the output sequence is computed by the correlation operation between the snapshot and the PRN code sequence with the correspondent delay of the correlator at a sampling time point.

11. The method according to any of claims 1 to 10 further comprising taking and processing a snapshot of the received GNSS signal at a predetermined duty cycle of a cycle, wherein the snapshot and the cycle are set to at least one of:

    - a duration of the snapshot duration is tens or hundreds of milliseconds;
    - a duration of the snapshot duration is 200ms;
    - the duty cycle is between 2% and 20% of the cycle;
    - the duty cycle is between 20ms and 2 seconds; and

    the cycle is hundreds of milliseconds or a few seconds.

12. The method according to any of claims 1 to 11, wherein the received GNSS signal comprises a line-of-sight, LOS, signal component and one or more signal components from at least one additional propagation path.

13. A module for processing global navigation satellite system, GNSS, signals configured to perform a method according to any one of claims 1 to 12.

14. A terminal device comprising a module according to claim 13.

15. A computer program product comprising instructions which, when executed on one or more processors of a device having a hardware module, cause the one or more processors to perform a method according to any one of claims 1 to 12.

**Fig 2**

**Fig 1**

**Fig 3b**

**Fig 3a**

**Fig 3c**

**Fig 4**

# EUROPEAN SEARCH REPORT

**Application Number**

EP 24 20 0276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/199812 A1 (CHENG ZHENLAN [CH] ET AL) 1 July 2021 (2021-07-01) <br> * paragraph [0016] - paragraph [0021] * <br> * paragraph [0045] - paragraph [0055] * <br> * paragraph [0065] - paragraph [0079] * <br> * figures 1-5 * <br> * abstract * <br> ----- | 1-15 | INV. <br> G01S19/22 <br> G01S19/30 |
| A | US 2014/232597 A1 (HYUN SUNG-HWAN [KR]) 21 August 2014 (2014-08-21) <br> * the whole document * <br> ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 12 February 2025 | Galmiche, Aurélien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 0276

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | Publication date |
|---|---|---|---|
| US 2021199812 A1 | 01-07-2021 | CN 112166346 A | 01-01-2021 |
| | | EP 3785050 A1 | 03-03-2021 |
| | | US 2021199812 A1 | 01-07-2021 |
| | | WO 2019219218 A1 | 21-11-2019 |
| US 2014232597 A1 | 21-08-2014 | CN 103869337 A | 18-06-2014 |
| | | KR 20140076352 A | 20-06-2014 |
| | | US 2014232597 A1 | 21-08-2014 |

EPO FORM P0459

For more details about this annex : see Official Journal of the European Patent Office, No. 12/82